## Europäisches Patentamt
## European Patent Office
## Office européen des brevets

(11) Numéro de publication: **0 095 430**
**B1**

(12) **FASCICULE DE BREVET EUROPÉEN**

(45) Date de publication du fascicule du brevet:
23.07.86

(51) Int. Cl.⁴: **B 21 D 43/05,** B 65 G 25/02

(21) Numéro de dépôt: **83401060.5**

(22) Date de dépôt: **26.05.83**

(54) Dispositif perfectionné de transfert à barres.

(30) Priorité: **26.05.82 FR 8209139**

(43) Date de publication de la demande:
**30.11.83 Bulletin 83/48**

(45) Mention de la délivrance du brevet:
**23.07.86 Bulletin 86/30**

(84) Etats contractants désignés:
**BE DE GB IT SE**

(56) Documents cité:
**FR-A-2 318 731**
**US-A-3 155 241**
**US-A-3 421 637**
**US-A-3 655 070**
**US-A-3 771 669**
**US-A-4 198 845**

(73) Titulaire: **SOCIETE D'ETUDE ET DE RECHERCHE DE PRODUITS "SEPRO", 44, Boulevard des Etats- Unis, F-85002 La Roche- Sur- Yon Cedex (FR)**

(72) Inventeur: **Mouezy, Roger, 26, rue de la Martinière, F-85000 La Roche Sur Yon (FR)**

(74) Mandataire: **Loyer, Yves, CABINET PIERRE LOYER 18, rue de Mogador, F-75009 Paris (FR)**

LIBER, STOCKHOLM 1986

## Description

Parmi les solutions modernes du problème des manutentions automatiques de pièces, notamment sur les presses, la technologie connue sous la désignation de transfert à barres et pinces présente de grands avantages car elle permet de réaliser dans un cycle simple et avec une fiabilité optimale le déchargement d'un poste de travail avant d'en effectuer le chargement sans jamais cesser de maintenir positivement les pièces dans une position parfaitement définie mécaniquement.

Selon cette technologie les pièces sont portées par des pinces montées sur des barres horizontales qui les supportent; ces barres étant elles-mêmes mobiles par rapport à la presse ou autre machine-outil.

Les transfers à barres habituellement associés aux presses, par exemple pour l'emboutissage ou la découpe et réalisant la manutention automatique des pièces sur les postes de travail, sont réalisés soit en configuration bi-axe, soit en configuration tri-axe.

Dans la configuration bi-axe, les barres sont susceptibles de déplacement longitudinal et transversal et les éléments d'entraînement mécanique comprennent deux sorties motrices distinctes, l'une pour l'entraînement longitudinal et l'autre pour l'entraînement transversal. Dans la configuration tri-axe, il y a trois sorties motriceu distinctes, la troisième étant destinée à un mouvement vertical de déplacement des barres.

Le brevet FR—A—2.318.731 décrit une configuration tri-axe (trois axes de déplacement des barres) dans laquelle les déplacements transversal et vertical sont réalisés par une seule sortie motrice, le mouvement alternatif d'une crémaillère coopérant avec des pignons, des roues dentées et des crémaillères secondaires pour obtenir ces deux déplacements. Dans ce dispositif, les mouvements sont simultanés et on ne peut verrouiller la position transversale pendant le déplacement vertical et réciproquement.

L'invention concerne la configuration tri-axe et a pour objet un dispositif de transfert à barres comprenant des porte-pinces portés par des barres horizontales mobiles par rapport à la machine-outil selon plusieurs directions, dans lequel les trois entraînements (longitudinal, transversal, vertical) sont réalisés avec seulement deux sorties motrices, la première assurant l'entraînement longitudinal des barres et la second assurant l'entraînement longitudinal des barres et la second assurant l'entraînement transversal at l'entraînement vertical des glissières supportant les barres et/ou des éléments de pinces supportés par les barres; ce dispositif est caractérisé en ce que les entraînements transversal et verticl sont successifs et la seconde sortie motrice est réalisée sous forme d'un élément à mouvement linéaire qui agit sur deux transmission mécaniques, la première entraînant successivement le déplacement transversal sur la première partie de la course de l'élément puis le vérrouillage de ce déplacement sur la seconde partie de la course, la second entraînant successivement le verrouillage du déplacement vertical sur la première partie de la course puis le déplacement vertical sur la second partie de la course, ces deux transmissions étant liées mécaniquement en position avec liberté de glissement relatif, l'entraînement vertical résultant de la coopération d'un profil de came sur lequel roule un galet, avec un levier articulé en un point du bâti, un autre point du levier étant relié à la pièce à déplacer, ce profil de came comportant deux zones successives, l'une assurant l'entraînement, l'autre assurant le verrouillage de cet entraînement.

Les avantages pratiques de l'invention sont nombreux:

— le même mécanisme d'entraînement est susceptible d'être utilisé pour la réalisation, soit d'un ensemble bi-axe, soit d'un ensemble tri-axe;
— la synchronisation mécanique entre les déplacements transversaux et verticaux est obtenue par construction. Elle est donc systématique et rigoureuse.

En variante, l'entraînement transversal et/ou l'entraînement vertical ainsi obtenu peuvent être appliqués non pas aux glissières supportant les barres mais à des mâchoires de pinces.

L'invention vise également les dispositions suivantes:

a) Une transmission mécanique telle que ci-dessus résulte de la coopération d'un profil de came solidaire de la tringle, sur lequel roule un galet porté par un levier fixé en un point du bâti, un autre point dudit levier étant relié à la pièce à déplacer;

b) Une telle transmission mécanique résulte de la coopération d'un profil de came porté par une pièce articulée sur le bâti et sur lequel roule un galet porté par l'élément la pièce articulée sur la bâti entraînant la pièce à déplacer selon l'un des déplacement recherchés;

c) Les profils de came selon a) et b) comportent deux zones, l'une assurant l'entraînement, l'autre assurant le verrouillage de cet entraînement;

d) Une telle transmission mécanique résulte d'un combinaison bielle manivelle, la bielle étant articulée sur l'élément le calage étant réalisé de telle sorte que dans une première partie de sa course, l'élément provoque la rotation du la manivelle jusqu'à son point mort, la seconde partie de sa course correspondant à la zone de point mort et de ce fait à un verrouillage de déplacement correspondant;

e) La course de déplacement vertical de la sortie motrice est réglable en amplitude.

L'invention est plus amplement décrite ci-après avec référence au dessin annexé sur lequel:

— La figure 1 est une vue perspective schématique de la commande des mouvements transversaux et verticaux à partir d'une sortie unique selon l'invention;
— Les figures 2, 3 et 4 illustrent des variantes de réalisation de l'invention;
— La figure 5 est relative à une variante dans laquelle de déplacement vertical est utilisé à la commande d'une mâchoire de pince linéaire;
— La figure 6 est relative à une variante dans laquelle le déplacement transversal est utilisé à la commande c'e fermeture d'une pince à doigts articulés dont les extrémités sont soulevées par le déplacement vertical.

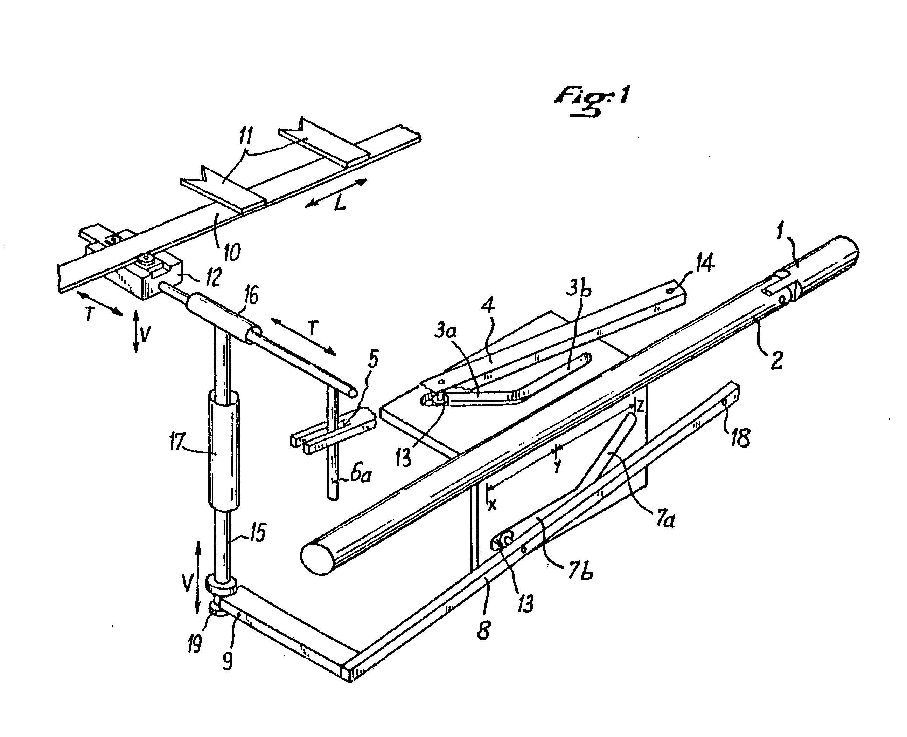

En se reportant à la figure 1, on voit en 10 une barre de transfert avec ses pièces de préhesion 11 disposées de place en place. La barre 10 est animée d'un mouvement longitudinal selon les flèches L par toute sortie motrice appropriée non représentée.

Dans ce mouvement, la barre 10 coulisse dans des glissières ou coulisses 12 qui sont elles-mêmes susceptibles de déplacement transversal (flèches T) et vertical (flèches V) l'ensemble constituant la configuration dite tri-axe.

Conformément à l'invention, le déplacement transversal T et le déplacement vertical V sont obtenus à partir d'une sortie motrice unique entraînée à partir de tout mécanisme approprié, par un organe de liaison mécanique 1 et qui est constitué par un élément 2 mobile selon une trajectoire linéaire avec une course déterminée schématisée par le segment XYZ, une partie de cette course étant transformée mécaniquement en déplacement transversal T et l'autre partie de cette course étant transformée mécaniquement en déplacement vertical V par les cames 3 et 4 liées à l'élément 2 et agissant sur les leviers 4 et 8 par l'intermédiaire des galets 13.

Le levier 4 est articulé en un point 14 fixe par rapport au bâti non représenté et son extrémité 5 porte une fourchette entraînant transversalement le coulisseau 6 relié à la coulisse 12. Le profil de la came 3 est déterminé de telle sorte que la partie XY de la course de l'élément 2 provoque un déplacement du levier 4 entraînant transversalement la glissière 12 tandis que sur la partie YZ de cette même course, le levier 4 est verrouillé en position transversale (zone 36 de la came 3 parallèle au déplacement de l'élément 2). Le levier 8 est articulé en un point fixe 18 et son extrémité 9 coopère en fourchette 19 avec l'extrémité de la tige 15 portant le manchon 16 dans lequel coulisse le coulisseau 6. La tige 15 est guidée dans son mouvement vertical par le manchon fixe 17. Le profil de la came 7 est déterminé de telle sorte que la partie ZY de la course de l'élément 2 provoque un déplacement du levier 8 entraînant verticalement la glissière 12, tandis que dans la partie YX de cette course le levier 8 est verrouillé en position verticale (zone 7b de la came 7 parallèle au déplacement de l'élément 2).

Les transmissions de mouvement vertical et transversal sont, comme on le voit, reliés entre eux en position. Mais cette liaison comprend la fourchette 5 dans laquelle coulisse verticalement l'extrémité 6a de la coulisse 6 et le manchon 16 dans lequel la coulisse 6 est libre transversalement, c'est-à-dire que la transmission de mouvement transversal comporte des moyens autorisant le libre mouvement de la transmission verticale et réciproquement.

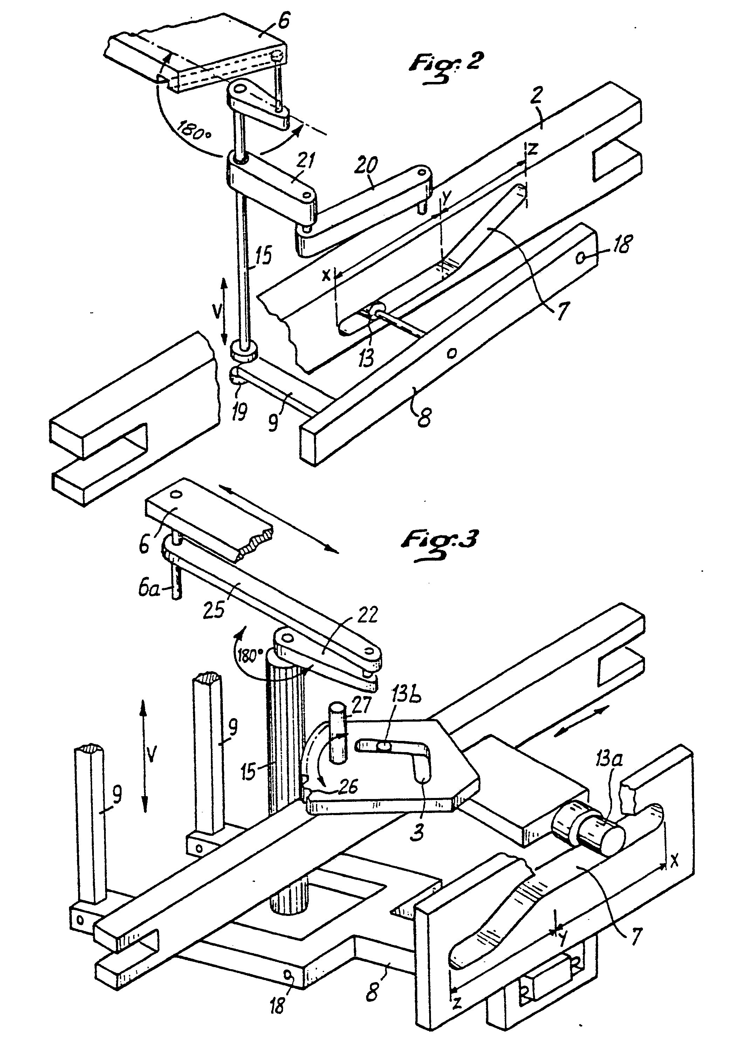

Dans l'exemple de la figure 2, l'élément 2 provoque le mouvement vertical par les mêmes moyens que dans la figure 1 savoir: came 7, galet 13 porté par le levier 8 articulé en 18 et agissant par le bras 9 sur la tige verticale 15.

Dans la partie XY de la course de l'élément 2, le mouvement vertical est nul, le galet 3 restant fixe en position du fait du parallélisme de la came 7 et du déplacement de l'élément 2. La course YZ provoque par contre l'entraînement vertical de la tige 15 et, par suite, de la coulisse 6 liée à la glissière 12.

Le mouvement transversal est obtenu par la bielle 20 qui entraîne la manivelle 21, fixe en rotation sur l'arbre 15, lequel cependant, peut coulisser dans la manivelle 21. La rotation de la manivelle 21 entraîne la rotation de la manivelle 22 qui entraîne transversalement la coulisse 6 par roulement du galet 23 dans la rainure 24 ou par une bielle intermédiaire 25 comme dans la figure 3.

Dans l'exemple représenté, les pièces 20, 21 sont établies pour que la course XY donne une rotation de 180° de l'arbre 15 et la manivelle 22 est calée de façon qu'au terme de cette rotation, la bielle 23 fasse avec la direction de déplacement de l'élément 2 un angle proche de 180°; de cette manière, la course YZ de l'élément 2 ne provoque qu'une faible oscillation de l'axe 15, ce qui donne une position pratiquement immobile de la coulisse transversale.

Pendant la course XY l'arbre 15 tourillone librement en 19 à l'extrémité du bras 9. Pendant la course YZ l'arbre 15 coulisse librement dans la manivelle 21.

Dans l'exemple de la figure 3, le mouvement vertical est obtenu par une came 7 portée par une pièce 8a solidaire du levier 8 articulé en 18 et qui transmet le mouvement vertical au coulisseau 6 (non représenté) par les bras 9. L'élément 2 agit sur la came 7 par le galet 13a.

Le mouvement transversal est obtenu par un secteur denté 26 solidaire de la came 3 et engrenant avec l'arbre 15. La came 3 est articulée autour d'un axe fixe 27 et déplacée par le galet 13b porté par l'élément 2. La course XY de l'élément 2 et du galet 13a provoque une rotation du secteur denté 26 qui entraîne la manivelle 22, le coulisseau 6 par la bielle 25.

Au terme de cette rotation, la deuxième partie de la came 3 correspondant à la course YZ est parallèle au déplacement de l'élément 2, ce qui verrouille le galet 13b en position.

On peut prévoir l'arbre 15 fixe en position verticale et libre en rotation, l'entraînement de la coulisse 6 se faisant par une tige 6a coulissant dans la bielle 25. On peut également prévoir que l'arbre 15 est cannelé et lié à l'équipage de déplacement vertical: dans ce cas, le secteur 26 coulisse le long de l'arbre 15 qui, de son côté, tourillonne librement dans son support.

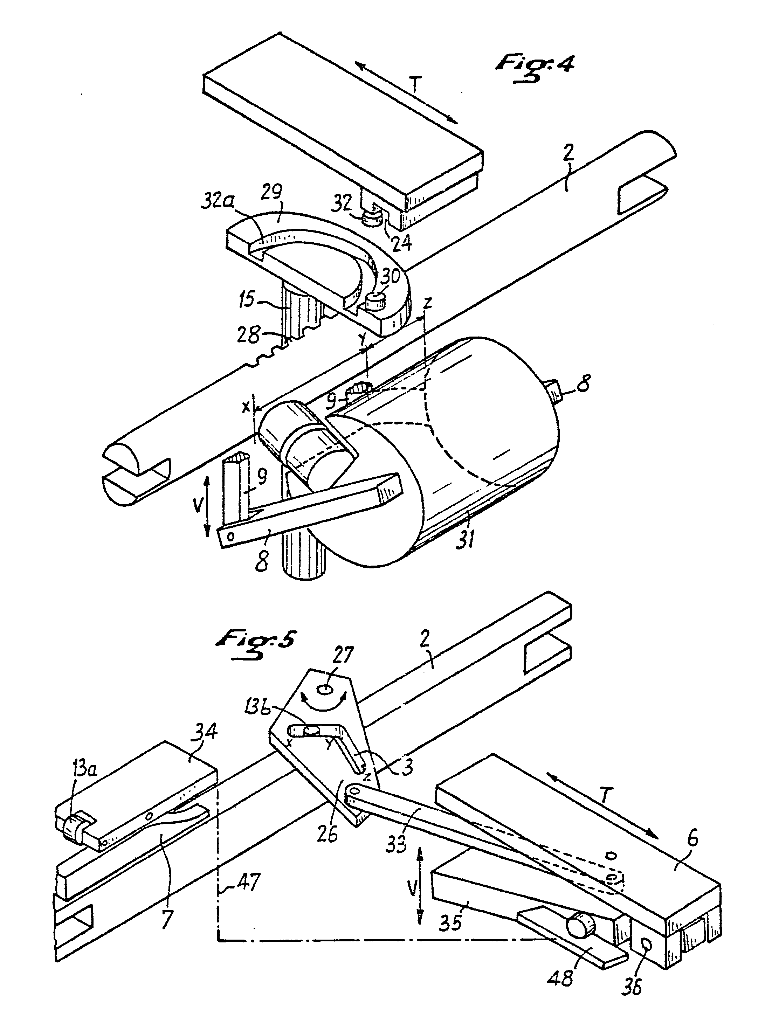

Dans l'exemple de la figure 4, l'élément 2 porte une crémaillère 28 qui engrène avec l'arbre 15, lequel est cannelé et peut librement coulisser verticalement. L'arbre 15 porte un plateau 29 qui forme manivelle et porte un galet 30 coulissant dans la rainure 24 de la coulisse 6. La course XY provoque ainsi le mouvement transversal par rotation de l'arbre 15. L'arbre 15 est monté tourillonnant librement sur l'équipage de mouvement vertical comprenant les bras 9 actionnés par les leviers 8. Les leviers 8 sont montés sur le cylindre 31 qui porte la came 3 sur laquelle agit le galet 13a porté par l'élément 2. Le profil de la came 3 est parallèle au déplacement de l'élément 2 sur la course XY ce qui verrouille la coulisse 6 en hauteur tandis que s'opère l'entraînement transversal T. Dans la course YZ, la came 3 provoque la rotation du cylindre 31 qui entraîne verticalement les bras 9, l'arbre 15, le plateau 29 et la coulisse 6.

Pendant cette course, le galet 30 échappe de la glissière 24 et la rotation du plateau 29 n'agit plus sur le déplacement transversal. Un moyen peut être prévu pour bloquer la coulisse 6 contre tout déplacement transversal pendant la course YZ, par exemple le galet 32 coagissant avec la rainure circulaire 32a portée par le plateau 29.

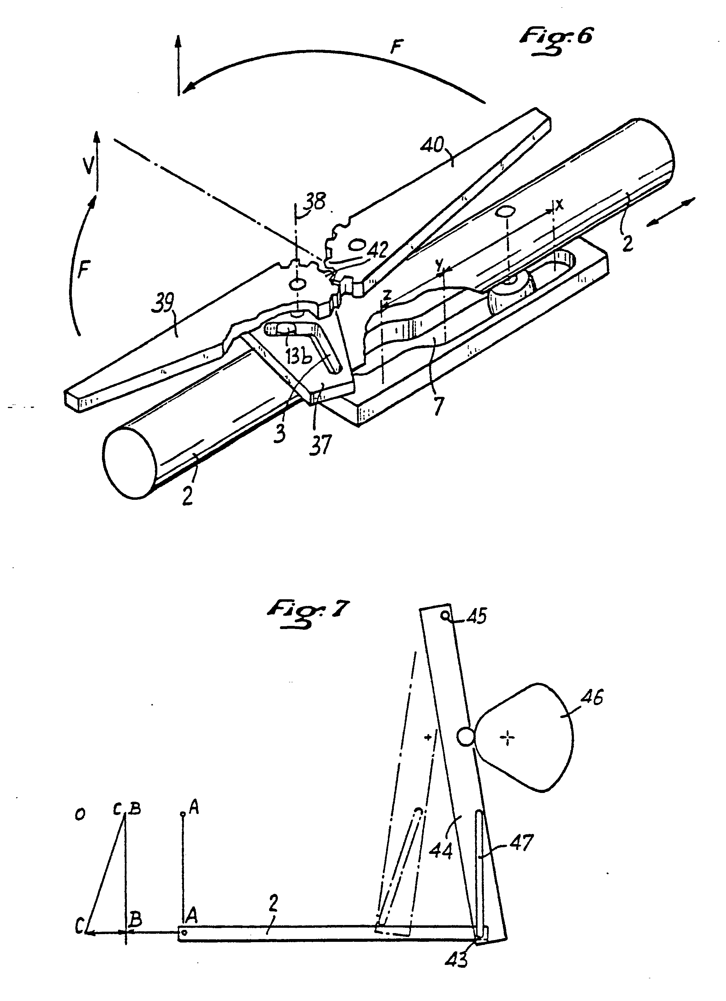

Dans l'exemple de la figure 5, l'entraînement vertical V est utilisé à réaliser la fermeture d'une pince. L'élément 2 provoque de déplacement transversal T de façon analogue aux figures précédentes par la came 3 articulée en 27 dont le profil est tel que la course XY provoque la rotation de la manivelle 26 qui entraîne la bielle 33 provoquant le déplacement transversal de la coulisse ou glissière 6. Pendant la course YZ, le profil de la came 3 est parallèle au déplacement de l'élément 2 et le déplacement transversal est verrouillé.

L'élément 2 porte en outre une came 7 sur laquelle roule le galet 13a. Pendant la course XY, le profil de cette came est parallèle au déplacement de l'élément 2 et le renvoi de mouvement 34 portant le galet 13a est verrouillé en position.

Pendant la course YZ, au contraire ce renvoi est basculé.

Ce mouvement peut être utilisé au soulèvement de la glissière 6. Dans l'exemple représenté, il est utilisé par une transmission, non représentée (schématisée par le trait mixte 47 et la plaque mobile 48), à la fermeture d'un mâchoire 35 articulée en 36 sur la coulisse ou glissière 6.

Dans l'exemple de la figure 6, la course horizontale transversale est une course de rotation de bras horizontaux; l'élément 2 agit sur sa course XY sur la came 3 par le galet 13b et provoque la rotation de la pièce 37 autour de l'axe 38 solidaire de l'arbre 41, fixe en position. Cette rotation provoque la fermeture (selon les flèches F) des bras horizontaux 39, 40 formant pince à doigts articulés (ces pinces engrènent entre elles en 42). Sur sa course YZ, l'élément 2 coopère avec la came 7, qui est fixe, ce qui provoque un pivotement de l'élément 2 selon son axe et par suite un soulèvement V des extrémités des pinces.

Dans la partie de la course XY, la came 7 a un profil parallèle au déplacement de l'élément 2, ce que verrouille le soulèvement des pinces 39—40. Dans la partie YZ, le profil de la came 3 est parallèle à ce même déplacement, ce qui verrouille les pinces en position de fermeture.

De tous ces exemples, il découle que par le principe de l'invention, une partie de la course de l'action motrice fixée par construction, provoque la totalité de la course transversale horizontale. Le reste de la course provoque la course de soulèvement, avec une relation entre ces deux courses dépendant directement de la réalisation technologique interne. On voit donc que l'application de l'invention permet de construire des transferts dans lesquels la course verticale peut être facilement rendue réglable de 0 à 100% de sa valeur maximale par la seule variation de la course de l'action motrice. La figure 7 montre une réalisation possible de cette application.

L'élément de commande 2 peut en effet recevoir une course totale de commande ABC de longueur variable, le point initial A restant fixe, la course AB correspondant au mouvement transversal et la course BC correspondant au mouvement vertical étant de longueur variable. Ceci peut être obtenu en prévoyant une prise de mouvement 43 déplaçable sur un levier de commande 44 articulé en 45. Dans l'exemple représenté, le levier 45 est entraîné par la came 46 et comporte une lumière 47 dans laquelle coulisse le téton 43 de prise de mouvement de l'élément 2, cette lumière étant perpendiculaire à l'élément 2 lorsque le levier 45 est en position de début de course. Par déplacement relatif de l'ensemble 45, 46 perpendiculairement à l'élément 2, la course BC peut varier de 100% à 0% de sa valeur, la course AB restant constante.

Il est par ailleurs important de noter que dans ce cas, la relation entre les temps disponibles pour la course horizontale transversale et pour la course verticale varie en permanence en fonction de la course vertical choisie. Dans cette répartition, plus la course verticale est faible, plus le temps imparti pour la réaliser est faible. Dans les entraînements de transferts à vitesse variable, il est ainsi possible d'envisager l'obtention de performances de plus en plus élevées quand la course verticale diminue; quand elle devient nulle, la totalité du temps est utilisable pour le seul mouvement transversal horizontal, ce qui n'est pas le cas des transferts de conception habituelle.

**Revendications**

1. Dispositif de transfert à barres comprenant des porte-pinces (11) portés par des barres horizontales (10) mobiles par rapport à la machine-outil selon plusieurs directions, les trois entraînements (longitudinal, transversal, vertical) étant réalisés avec seulement deux sorties motrices, la première assurant l'entraînement longitudinal des barres (10) et la seconde assurant l'entraînement transversal horizontal T et l'entraînement vertical V des glissières (12) supportant les barres (10) et/ou des éléments de pinces supportées par les barres (10), caractérisé en ce que les entraînements transversal et vertical sont successifs, et la seconde sortie motrice est réalisée sous forme d'un élément (2) à mouvement linéaire qui agit sur deux transmissions mécaniques (3, 4, 5, 6 d'une part et 7, 8, 9, 15, 6 d'autre part sur la figue 1) la première entraînant successivement le déplacement transversal T sur la course XY première partie de la course de l'élément (2) de l'élément (2) puis verrouillage de ce déplacement sur la course YZ seconde partie de la course de l'élément (2) la second entraînant successivement le verrouillage du déplacement vertical sur la course XY première partie de la course de l'élément (2) puis le déplacement vertical V sur la course (YZ), seconde partie de la course de l'élément (2) ces deux transmissions étant liées mécaniquement en postion avec liberté de glissement relatif (par les organes 5, 6a et 16, 6 sur la figure 1), l'entraînement vertical résultant de la coopération d'un profil de came (7) sur lequel roule un galet (13), avec un levier (8) articulé en un point du bâti, un autre point du levier étant relié à la pièce à déplacer, ce profil de came comportant deux zones successives, l'une (7a) assurant l'entraînement, l'autre (7b) assurant le verrouillage de cet entraînement (figures 1 à 6).

2. Dispositif selon la revendication 1, caractérisé en ce que l'entraînement transversal T résulte de la coopération d'un profil de came (3, figure 1) porté par l'élément (2), sur lequel roule un galet (13) porté par un levier (4) articulé en un point du bâti, un autre point dudit levier étant relié à la pièce à déplacer (12), ledit profil de came comportant deux zones successives, l'une (3a) assurant l'entraînement, l'autre (3b) le verrouillage de cet entraînement, et que le profil de came (7) pour l'entraînement vertical est porté par l'élément (2).

3. Dispositif selon la revendication 2, caractérisé en ce que le profil de came (7) pour le déplacement vertical V est porté par une pièce articulée sur le bâti (8a, 31, figures 3 et 4) le profil de came (3) pour le déplacement transversal T étant porté par une pièce articulée (fig. 3, 5, 6).

4. Dispositif selon la revendication 1, caractérisé en ce qu'une telle transmission mécanique résulte pour l'entraînement transversal d'une combinaison bielle-manivelle, la bielle (20, figure 2) étant articulée sur l'élément (2) et la manivelle (21) portée par un arbre rotatif (15), le calage étant réalisé de telle sorte que, dans une première partie de sa course l'élément (2) provoque la rotation de la manivelle jusqu'à environ son point mort, la seconde partie de ladite course s'étendant sur la zone de point mort et assurant le verrouillage du déplacement correspondant.

5. Dispositif selon la revendication 1, caractérisé en ce qu'une transmission mécanique pour l'entraînement transversal est obtenu par une crémaillère (28, figure 4) solidaire de l'élément (2) entraînant un arbre cannelé (15) portant une manivelle (29) d'entraînement de la pièce à déplacer, la calage de la manivelle étant tel que l'une des deux parties de la course de l'élément (2) corresponde à la zone de point mort de la manivelle et par suite au verrouillage du déplacement correspondant.

6. Dispositif selon la revendication 1, caractérisé en ce que la course YZ de déplacement vertical e l'élément (2) est réglable en amplitude.

**Patentansprüche**

1. Stangentransfervorrichtung mit horizontalen, in bezug auf die Werkzeugmaschine in mehrere Richtungen beweglichen Stangen (10) mit darauf befestigten Spannzangenhaltern (11), wobei die drei Antriebsarten (Längs-, Quer- und Vertikalantrieb nur über zwei Motorabtriebe erfolgen, von denen der erste für den Längsantrieb der Stangen (10) und der zweite für den horizontalen Querantrieb T sowie für den Vertikalantrieb V der Führungen (12), auf denen die Stangen (10) bzw, die auf den Stangen (10) befestigten Spannzangenteile angebracht sind, dient, dadurch gekennzeichnet, daß Quer- und Vertikalantrieb hintereinander erfolgen und daß der zweite Motorabtrieb als Bauteil mit linearer Bewegung (2) ausgeführt ist, der auf zwei mechanische Übertragungen (3, 4, 5, 6 bzw. 7, 8, 9, 15, 6 auf Abb. 1) wirkt, von denen die eine erste die Querbewegung T des Wegs XY (erste Wegstrecke des Bauteils (2)), dann die Verriegelung dieser Bewegungsrichtung auf der Wegstrecke YZ (zweite Wegstrecke des Bauteils (2)) und die zweite erste die Verriegelung der Vertikalbewegung V auf dem Weg XY (erste Wegstrecke des Bauteils (2)), dann die Vertikalbewegung V auf dem Weg YZ (zweite Wegstrecke des Bauteils (2)) antreibt, wobei die beiden Übertragungen mit einer relativen Schlupffreiheit (durch die Organe 5, 6a und 16, 6 auf Abb. 1) in Position gehalten werden und der Vertikalantrieb durch das Zusammenwirken eines Nockenprofils (7), auf dem eine Rolle (13) läuft, mit einem Hebel (8) erfolgt, der an einem Punkt des Gestells gelenkig gelagert ist, während ein anderer Punkt des Hebels mit dem zu verstellenden Teil verbunden ist, wobei dieses Nockenprofil nacheinander zwei Bereiche aufweist, von denen der eine (7a) den Antrieb und der andere (7b) die Verriegelung dieses Antriebs wahrnimmt (Abb. 1—6).

2. Vorrichtung nach Anspruch 1, dadruch gekennzeichnet, daß der Querantrieb T durch das Zusammenwirken eines auf Bauteil (2) befestigten Nockenprofils (3, Abb. 1), auf dem eine Rolle (13) läuft, mit einem Hebel (4) erfolgt, der an einem Punkt des Gestells gelenkig gelagert ist, während ein anderer Punkt dieses Hebels mit dem zu verstellenden Teil (12) verbunden ist, wobei dieses Nockenprofil nacheinander zwei Bereiche aufweist, von denen der eine (3a) den Antrieb und der andere (3b) die Verriegelung dieses Antriebs wahrnimmt, und daß das Nockenprofil (7) für den Vertikalantrieb ebenfalls au Bauteil (2) befestigt ist.

3. Vorrichtung nach Anspruch 2, dadurch gekennzeichnet, daß das Nockenprofil (7) für die Vertikalbewegung V von einem mit dem Gestell gelenkig verbundenen Teil (8a, 31 auf Abb. 3 und 4) und daß das Nockenprofil (3) für die Querbewegung T desgleichen von einem Gelenkteil (Abb. 3, 5 und 6) getragen wird.

4. Vorrichtung nach Anspruch 1, dadurch gekennzeichnet, daß die mechansiche Übertragung für den Querantrieb aus einer Verbindung von Kurbelstange und Kurbel besteht, wobei die Kurbelstange (20, Abb. 2) gelenkig mit Bauteil (2) verbunden ist und die Kurbel (21) auf einer Drehachse (15) angebracht ist, wobei die Einstellung so erfolgt, daß Bauteil (2) auf dem ersten Teil seines Wegs die Drehung der Kurbel bis ungefähr zum Leerlaufpunkt bewirkt, während sich die zweite Wegstrecke auf den Leerlaufbereich ersteckt und somit die Verriegelung der entsprechenden Bewegung gewährleistet.

5. Vorrichtung nach Anspruch 1, dadurch gekennzeichnet, daß die mechanische Übertragung für den Querantrieb aus einer mit Bauteil (2) fest verbundenen Zahnstange (28, Abb. 4) besteht, die eine Nutwelle (15) antreibt, an der die Kurbel (29) zum Antrieb des zu verstellenden Teils befestigt ist, wobei die Kurbeleinstellung so erfolgt, daß eine der beiden Wegstrecken von Bauteil (2) dem Leerlaufbereich der Kurbel und somit der Verriegelung der jeweiligen Bewegung entspricht.

6. Vorrichtung nach Anspruch 1, dadurch gekennzeichnet, daß die Amplitude des Wegs YZ der vertikalen Bewegung von Bauteil (2) einstellbar ist.

**Claims**

1. A bar-transfer transfer device comprising tongs-holders (11) carried by horizontal bars (10) mobile relatively to the machine-tool along several directions, the three drives (longitudinal, transversal, vertical) being effect with only two power out-puts, the first one operating the longitudinal drive of the bars (10) and the second one operating both the horizontal transversal drive T and the vertical drive V of the slides (12) supporting the bars (10) and/or of the tongs elements supported by the bars (10), characterized in that the transversal and vertical driving movements are successive, and the second power out-put is built in the form of a linearly moving element (2) actuating two mechanical transmissions (3, 4, 5, 6 on one part and 7, 8, 9, 15, 6 on another part in Figure 1), the first transmission driving successively the transversal displacement T of element (2) over the XY stroke (the first portion of the stroke of element (2) and then the locking of this displacement over the YZ stroke (the second portion of the stroke of element (2)), the second transmission driving successively the locking of the vertical displacement over the XY stroke (the first portion of the stroke of element (2)) and then the vertical displacement V over the YZ stroke (the second portion of the stroke of element (2)), these two transmissions being linked together mechanically in position with relative sliding freedom (through members 5, 6a and 16, 6 in Figure 1), the vertical drive resulting from the cooperation of a cam profile (7) on which is rolling a roller (13) with a lever (8) articulated in one point of the frame, another point of the lever being connected to the part which is to be displaced, this cam profile comprising two successive zones, one (7a) operating the drive, and the other (7b) operating the locking of this drive (Figures 1 to 6).

2. A device according to claim 1, characterized in that the transversal drive T results from the cooperation of a cam profile (3, Figure 1) carried by element (2), upon which is rolling a roller (13) carried by a lever (4) articulated in one point of the frame, another point of said lever being connected to the part which is to be moved (12), said cam profile comprising two successive zones, one (3a)) providing the drive, the other (3b) the locking of this drive, and in that the cam profile (7) for the vertical drive is carried by the element (2).

3. A device according to claim 2, characterized in that the cam profile (7) for the vertical displacement V is carried by a part articulated on the frame (8a, 31, Figures 3 and 4), the cam profile (3) for the transversal displacement T being carried by an articulated part (Fig. 3, 5, 6).

4. A device according to claim 1, characterized in that such a mechanical transmission results for the transversal drive from a rod-and-crank combination, the connecting rod (20, Figure 2) being articulated on element (2) and the crank (21) carried by a rotary shaft (15), the keying being made in such manner that, through a first portion of its stroke the element (2) will cause a rotation of the crank until it reaches approximately its dead centre, the second portion of said stroke extending over the dead-centre zone and operating the locking of the corresponding displacement.

5. A device according to claim 1, characterized in that a mechanical transmission for the transversal drive is obtained by means of a rack (28, Figure 4) integral with the element (2) driving a fluted shaft (15) carrying a crank (29) driving the part to be moved, the keying of the crank being such that one of the two portions of the stroke of element (2) will correspond to the dead-centre zone of the crank and therefore to the locking of the corresponding displacement.

6. A device according to claim 1, characterized in that the YZ stroke of vertical displacement of element (2) is adjustable as to its amplitude.

Fig.1

0 095 430

Fig. 2

Fig. 3

3

*Fig:4*

*Fig:5*

*Fig.6*

*Fig.7*